(19) Europäisches Patentamt
European Patent Office
Office européen des brevets

(11) **EP 4 542 704 A2**

(12) **EUROPEAN PATENT APPLICATION**

(43) Date of publication:
**23.04.2025 Bulletin 2025/17**

(21) Application number: **24207109.0**

(22) Date of filing: **17.10.2024**

(51) International Patent Classification (IPC):
***H01M 10/0525*** *(2010.01)*

(52) Cooperative Patent Classification (CPC):
**H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 CN 202311356280**

(71) Applicants:
- **Zhuhai CosMX Battery Co., Ltd.**
  **Zhuhai, Guangdong 519180 (CN)**
- **Zhuhai Guanqi New Material Co., Ltd.**
  **Zhuhai Guangdong 519050 (CN)**

(72) Inventors:
- **ZENG, Jiajiang**
  **Zhuhai, 519180 (CN)**
- **LI, Suli**
  **Zhuhai, 519180 (CN)**
- **XIA, Dingguo**
  **Zhuhai, 519180 (CN)**

(74) Representative: **Elzaburu S.L.P.**
**Paseo de la Castellana 259C**
**Torre de Cristal, planta 28**
**28046 Madrid (ES)**

(54) **POSITIVE ELECTRODE ACTIVE MATERIAL, POSITIVE ELECTRODE SHEET AND LITHIUM-ION BATTERY**

(57) The present invention provides a positive electrode active material, a positive electrode sheet and a lithium-ion battery. When the battery, which is formed by the positive electrode active material and a lithium metal negative electrode, is discharged to a discharge cut-off voltage of 3.0 V at a rate of less than 1 C after being charged to a SOC of 100% at a rate of less than 1 C with a charge cut-off voltage of 4.55 V to 4.65 V, the number N of discharge peaks in the capacity-voltage differential curve of the battery is not less than 4. Under high-voltage condition, the positive electrode active material not only has excellent specific capacity and cycling performance, but also has more prominent rate performance.

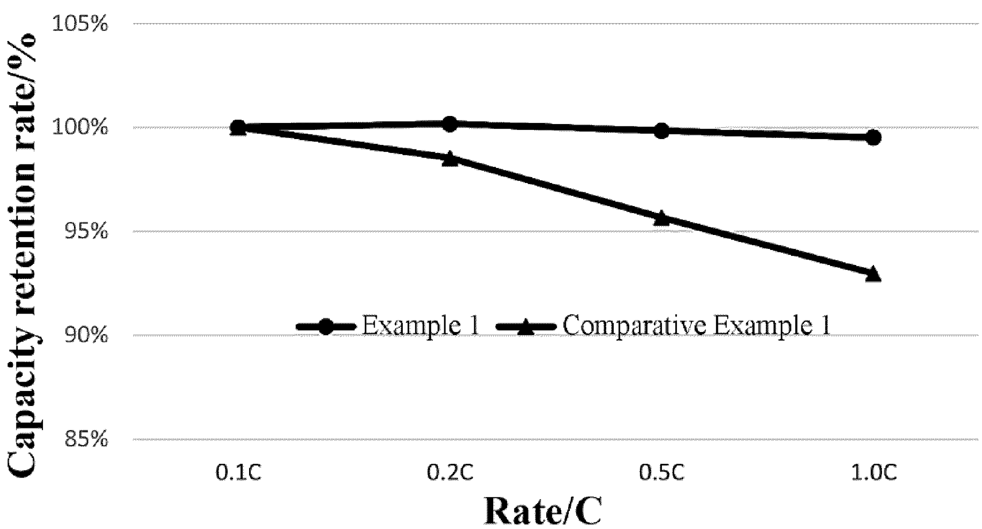


FIG. 8

EP 4 542 704 A2

## Description

### TECHNICAL FIELD

The present invention relates to an electrode sheet material, in particular to a positive electrode active material, a positive electrode sheet and a lithium-ion battery, belonging to the technical field of secondary batteries.

### BACKGROUND

With the development and progress of lithium-ion battery technology, higher and higher requirements are placed on its capacity. In the composition of the lithium-ion battery, the capacity of the positive electrode active material plays a vital role in the capacity of the lithium-ion battery.

In order to increase the capacity of the lithium-ion battery, a most common method is to increase charge and discharge voltage thereof. However, as the voltage increases, the crystal structure of the positive electrode active material will collapse, leading to a series of problems such as rapid capacity decay and a significant reduction in cycling performance. Especially when the battery is discharged at a high rate, the deterioration of the capacity and cycling performance is more prominent.

Therefore, it is an urgent technical problem in this field to develop a positive electrode active material for the lithium-ion battery with high specific capacity and good cycling performance at high rate.

### SUMMARY

The present invention provides a positive electrode active material, which has excellent specific capacity, cycling performance and rate performance under high-voltage conditions.

The present invention provides a positive electrode sheet, which includes the above-mentioned positive electrode active material, thereby helping to improve the electrical properties of the battery including specific capacity, cycling performance and rate performance.

The present invention further provides a lithium-ion battery, which includes the above-mentioned positive electrode sheet, and thus the lithium-ion battery has excellent behaviors in specific capacity, rate performance and cycling performance.

The present invention provides a positive electrode active material, and a positive electrode sheet including the positive electrode active material and a lithium metal negative electrode form a half battery, and when the half-battery is discharged to a discharge cut-off voltage of 3.0 V at a rate of less than 1 C after being charged to a SOC (state of charge) of 100% at a rate of less than 1 C with a charge cut-off voltage of 4.55 V-4.65 V, the number N of discharge peaks in a capacity-voltage differential curve of the battery is not less than 4.

The present invention further provides a positive electrode active material, a positive electrode sheet including the positive electrode active material and a lithium metal negative electrode form a full-battery, and when the full-battery is discharged to a discharge cut-off voltage of 3.0 V at a rate of less than 1 C after being charged to a SOC of 100% at a rate of less than 1 C with a charge cut-off voltage of 4.55 V-4.65 V, the number N of discharge peaks in a capacity-voltage differential curve of the battery is not less than 4.

In the positive electrode active material as described above, N=4 when the charge cut-off voltage is 4.55 V and the discharge cut-off voltage is 3.0 V;
and/or, N=5 when the charge cut-off voltage is 4.65 V and the discharge cut-off voltage is 3.0 V

In the positive electrode active material as described above, after the battery formed by a positive electrode sheet including the positive electrode active material, and a lithium metal negative electrode is charged to a SOC of 100% at a rate of less than 1 C with a charge cut-off voltage of 4.55 V to 4.65 V,

> when discharging at a first rate under the charge cut-off voltage $V_c$ of 4.55 V to 4.65 V, a first discharge peak with a discharge intensity of $Q_1$ appears in a voltage range of 3.5 to 4.0 V; and
> when discharging at a second rate at a charge cut-off voltage $V_c$ of 4.55 V to 4.65 V, a second discharge peak with a discharge intensity of $Q_2$ appears in a voltage range of 3.5 to 4.0 V, and the second rate is greater than the first rate; where $Q_1>Q_2$.

In the positive electrode active material as described above, intensity of the first discharge peak when the battery is discharged at a rate of 0.1 C to the discharge cut-off voltage is $Q_{0.1}$, and intensity of the second discharge peak when the battery is discharged at a rate of 0.5 C to the discharge cut-off voltage is $Q_{0.5}$, where $Q_{0.1}/Q_{0.5}<1.5$.

In the positive electrode active material as described above, the positive electrode active material includes a lithium metal oxide shown by Formula 1;

the lithium metal oxide belongs to a Cmca space group of a cubic crystal system and has a T2 phase stacked structure, and has a 002 peak with a 2θ of 17.8° to 18.1°, a 131 peak with a 2θ of 67.0° to 67.5°, a 111 peak with a 2θ of 37.9° to 38.3°, and a 112 peak with a 2θ of 41.2° to 41.6° in an X-ray diffraction spectrum;

$$Li_{x-y}Na_yCo_tM1_bM2_aO_2 \qquad \text{Formula 1}$$

in Formula 1, $0.6 \le x \le 1$, $0 < y \le 0.15$, $0 \le a \le 0.1$, $0 < b \le 0.1$, $0.98 \le t+b+a \le 1.02$; M1 is selected from at least one of Te, W, Al, B, P, S, Se, K, Rb and Cs; and M2 is a doping element different from M1.

Preferably, a ratio of peak intensity I1 of the 002 peak to peak intensity I2 of the 131 peak is 6-15.

Preferably, a ratio of peak intensity I1 of the 002 peak to peak intensity I3 of the 111 peak is 4-15, and the peak intensity I3 of the 111 peak is greater than peak intensity I4 of the 112 peak.

In the positive electrode active material as described above,

$$3 \leqslant S_{002/111}/Q1_{0.1/0.5} \leqslant 4.35, \text{ and/or, } 3.9 \leqslant S_{002/111}/Q2_{0.1/0.5} \leqslant 5$$

where $S_{002/111}$ is the ratio of the peak intensity I1 of the 002 peak to the peak intensity I3 of the 111 peak;
$Q1_{0.1/0.5}$ is a ratio of the intensity of the first discharge peak when the battery formed by the positive electrode sheet including the positive electrode active material and the lithium metal negative electrode is discharged at a rate of 0.1 C to the discharge cut-off voltage to the intensity of the second discharge peak when the battery is discharged at a rate of 0.5 C to the discharge cut-off voltage, after the battery is charged to a SOC of 100% at a rate of less than 1 C with a charge cut-off voltage of 4.65 V; and
$Q2_{0.1/0.5}$ is a ratio of the intensity of the first discharge peak when the battery formed by the positive electrode sheet including the positive electrode active material and the lithium metal negative electrode is discharged at a rate of 0.1 C to the discharge cut-off voltage to the intensity of the second discharge peak when the battery is discharged at a rate of 0.5 C to the discharge cut-off voltage, after the battery is charged to the SOC of 100% at a rate of less than 1 C with a charge cut-off voltage of 4.55 V

In the positive electrode active material as described above, the positive electrode active material has a Dv50 of 14-17.5 μm;
and/or, a particle diameter distribution curve of the positive electrode active material is a bimodal distribution curve.

In the positive electrode active material as described above, the positive electrode active material includes a first particle and/or a second particle, the first particle has a Dv50 of 4-6 μm, and the second particle has a Dv50 of 17.5-19.5 μm.

Preferably, the positive electrode active material includes 0-30% of the first particle and 70-100% of the second particle by mass percentage.

The present invention further provides a positive electrode sheet, which includes any one of the positive electrode active materials described above.

The present invention further provides a lithium-ion battery, which includes any one of the positive electrode active materials described above or the positive electrode sheet.

Preferably, the lithium-ion battery has a working voltage of greater than or equal to 4.5V.

In the lithium-ion battery as described above, the lithium-ion battery further includes a negative electrode sheet, and the negative electrode sheet includes a lithium-containing material layer.

In the lithium-ion battery as described above, metallic lithium in the lithium-containing material layer has a surface density of 0.09 mg/cm$^2$ to 3.5 mg/cm$^2$, preferably 0.2 to 2.0 mg/cm$^2$.

In the lithium-ion battery as described above, the lithium-ion battery further includes an electrolyte, and the electrolyte includes an additive shown in Formula T by mass percentage, and the mass percentage content of the additive in the electrolyte is 6-9%;

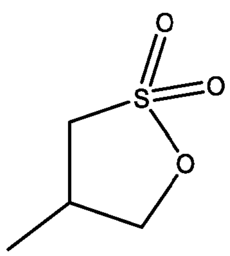

Formula T.

In the lithium-ion battery as described above, the electrolyte further includes 5-8% of fluoroethylene carbonate and 10-15% of lithium hexafluorophosphate.

The positive electrode active material of the present invention will not undergo obvious structural collapse even under high-pressure conditions and has excellent pressure resistance, so that the lithium-ion battery including the positive electrode active material can exhibit excellent specific capacity and cycling performance. Meanwhile, as the discharge rate increases, the discharge capacity of the lithium-ion battery can still maintain a considerable degree of stability, so the positive electrode active material also has a positive promoting effect on the rate performance of the lithium-ion battery.

## BRIEF DESCRIPTION OF DRAWINGS

FIG. 1 is a partial structural schematic diagram of a negative electrode sheet in a lithium-ion battery in an embodiment of the present invention.

FIG. 2 is an XRD (X-Ray Diffraction) spectrum of the positive electrode active material in Example 1 of the present invention.

FIG. 3 is capacity-voltage differential curves of button battery including the positive electrode active material of Example 1 in the present invention when charged and discharged with a charge cut-off voltage of 4.55 V at 0.1 C and 0.5 C respectively.

FIG. 4 is capacity-voltage differential curves of button battery including the positive electrode active material of Comparative Example 1 in the present invention when charged and discharged at 0.1 C and 0.5 C respectively with a charge cut-off voltage of 4.55 V.

FIG. 5 is capacity-voltage differential curves of button battery including the positive electrode active material of Example 1 in the present invention when charged and discharged at 0.1 C and 0.5 C respectively with a charge cut-off voltage of 4.65 V

FIG. 6 is capacity-voltage differential curves of button battery including the positive electrode active material of Comparative Example 1 in the present invention when charged and discharged at 0.1 C and 0.5 C respectively with a charge cut-off voltage of 4.65 V.

FIG. 7 is a particle diameter distribution diagram of the positive electrode active material in Example 1 of the present invention.

FIG. 8 is curves showing capacity retention rates of the batteries including the positive electrode active material in Example 1 and Comparative Example 1 of the present invention at different rates.

## DESCRIPTION OF EMBODIMENTS

In order to make the purpose, technical solutions and advantages of the present invention clearer, the technical solutions in the embodiments of the present invention will be clearly and completely described below in combination with the examples of the present invention. Obviously, the described examples are only part of the examples of the present invention, rather than all of the examples. Based on the examples of the present invention, all other examples obtained by those skilled in this field without making any creative work shall fall within the protection scope of the present invention.

A first aspect of the present invention provides a positive electrode active material. A positive electrode sheet including the positive electrode active material and a lithium metal negative electrode form a battery, and when the battery is discharged to a discharge cut-off voltage of 3.0 V at a rate of less than 1 C after being charged to a SOC of 100% at a rate of less than 1 C with a charge cut-off voltage of 4.55 V to 4.65 V, the number N of discharge peaks in a capacity-voltage differential curve of the battery is not less than 4. The battery is a half battery or a full-battery.

After forming the battery (including a half-battery and a full-battery) by the positive electrode including the positive electrode active material of the present invention and the lithium metal negative electrode (a negative electrode in which negative electrode active material only contains lithium metal), when the battery is charged to a SOC of 100% at an any rate of less than 1 C at a charge cut-off voltage $V_c$ of 4.55 V to 4.65 V, and then discharged to a discharge cut-off voltage $V_d$ of 3.0 V at an any rate of less than 1 C, the number of discharge peak in the capacity-voltage differential curve of the battery is not less than 4 during the charging and discharging process as long as both the charge rate and discharge rate of the battery are less than 1 C. It should be noted that the above-mentioned battery refers to a battery with a cycling number of not more than 10 turns, and the present invention does not have any limitation on an electrolyte constituting the above mentioned battery. That is, for the battery formed by the positive electrode sheet including the positive electrode active material of the present invention and the lithium metal negative electrode (with any electrolyte composition), under the premise that the cycling number is not more than 10 turns, the number N of discharge peak in the capacity-voltage differential curve of the battery is not less than 4 when the battery is discharged to the discharge cut-off voltage of 3.0 V at a rate of less than 1 C after being charged to a SOC of 100% at a rate of less than 1 C with the charge cut-off voltage of 4.55 V to 4.65 V

Specifically, the capacity-voltage differential curve is obtained by performing a capacity-voltage differential processing on the charge and discharge curves of the battery. In detail, the capacity-voltage differential curve includes two parts: a capacity-voltage differential charge curve and a capacity-voltage differential discharge curve. The above discharge peaks are all located in the capacity-voltage differential discharge curve. During the charging and discharging process of the battery, both the charge rate and the discharge rate are not more than 1 C and the two can be the same or different.

Specifically, discharge capacity of the battery will change with the change of a specific voltage value of the charge cut-off voltage (4.55 V, 4.6 V or 4.65 V, etc.), or the change of the charge rate (a change range not more than 1 C, such as 0.1 C, 0.2 C, 0.5 C, 1 C, etc.), or the change of the discharge rate (a change range not more than 1 C, such as 0.1 C, 0.2 C, 0.5 C, 1 C, etc.), etc. No matter how the current discharge condition changes, the capacity-voltage differential curve of the battery has at least four discharge peaks, such as 4, 5, 6, etc.

After the positive electrode active material of the present invention is applied to a lithium-ion battery, the lithium-ion battery can release more capacity as the charge voltage increases, and the discharge capacity of the lithium-ion battery remains stable as the number of charge and discharge cycles increases and the discharge rate increases. The number of the discharge peaks is related to the energy of lithium deintercalation and the reversibility of the material. Compared with commercial lithium cobaltate, the positive electrode active material of the present invention has more discharge peaks and a lower potential of the charge peak, indicating that it has a lower delithiation potential, which means that the material has a higher reversibility. Therefore, the positive electrode active material has prominent voltage resistance performance, cycling performance and rate performance. When the battery including the positive electrode active material of the present invention has the discharge peaks of not less than 4, the material requires lower energy during lithium deintercalation and has higher material reversibility. Thus the positive electrode active material is more prone to lithium deintercalation at the same voltage, thereby having a higher capacity, and better cycling performance and rate performance.

In a specific embodiment, N=4 when the charge cut-off voltage $V_c$ is 4.55 V and the discharge cut-off voltage $V_d$ is 3.0 V That is, when using 4.55 V (vs. Li) of charge cut-off voltage and discharged to 3.0 V, the capacity-voltage differential curve of the battery has 4 discharge peaks.

In another specific embodiment, N=5 when the charge cut-off voltage is 4.65 V and the discharge cut-off voltage is 3.0 V. That is, when using 4.65 V (vs. Li) of charge cut-off voltage and discharged to 3.0 V, the capacity-voltage differential curve of the battery has 5 discharge peaks.

Furthermore, when the battery formed by the positive electrode sheet including the above-mentioned positive electrode active material and the lithium metal negative electrode achieves SOC=100% according to the above-mentioned charging process and then is subjected to the aforesaid discharge treatment at different rates, the relationship between the discharge peak intensities at different rates has a certain degree of influence on the rate performance of the positive electrode active material within the voltage range of 3.5-4.0 V

Specifically, when the battery is discharged at a first rate under the charge cut-off voltage $V_c$ of 4.55 V to 4.65 V, a first discharge peak with a discharge intensity of $Q_1$ appears in a voltage range of 3.5 to 4.0 V; and when the battery is discharged at a second rate greater than the first rate under the charge cut-off voltage $V_c$ of 4.55 V to 4.65 V, a second discharge peak with a discharge intensity of $Q_2$ appears in a voltage range of 3.5 to 4.0 V;
where $Q_1 > Q_2$.

That is, when the battery is discharged to 3.5-4.0 V with $V_c$ (4.55 V-4.65 V) as the charge cut-off voltage, the discharge peak will appear in the voltage range of 3.5-4.0 V in the capacity-voltage differential curve of the battery, and the intensity of the discharge peak in this voltage range will vary at different discharge rates. Specifically, after the charging process is completed, when the battery is discharged at the first rate with 3V as the discharge cut-off voltage, the discharge peak will appear in the range of 3.5-4.0 V and the intensity of the discharge peak is $Q_1$; and when the battery is discharged at the second rate (greater than the first rate) with 3V as the discharge cut-off voltage, the discharge peak will appear in the range of 3.5-4.0 V and the intensity of the discharge peak is $Q_2$, where $Q_1$ is greater than $Q_2$.

It should be noted that the first rate and the second rate here are in a relative relationship and are not limited to a specific rate. Specifically, for example, compared 0.1 C with 0.5 C, 0.1 C is the first rate and 0.5 C is the second rate. Accordingly, intensity of the discharge peak at the discharge rate of 0.1 C is $Q_1$, and intensity of the discharge peak at the discharge rate of 0.5 C is $Q_2$, where $Q_1 > Q_2$.

The inventor found that when the above-mentioned relationship between the discharge peak intensities is met, the discharge platform representing the positive electrode active material has higher reversibility, and under the condition of discharging at the higher rate (second rate), the discharge platform can also release a capacity equivalent to that at the lower rate (first rate). Therefore, the rate performance of the positive electrode active material is more excellent, achieving a more stable capacity output at a higher rate.

In a specific embodiment, $Q_{0.1}/Q_{0.5}<1.5$, in which, $Q_{0.1}$ is the intensity of the first discharge peak in the range of 3.5-4.0 V in the capacity-voltage differential curve when the battery is discharged from a certain charge cut-off voltage $V_m$ within the range of 4.55 V-4.65 V, as an initial voltage, to 3.0 V at 0.1 C; and $Q_{0.5}$ is the intensity of the second discharge peak in the range of 3.5-4.0 V in the capacity-voltage differential curve when the battery is discharged from the same $V_m$ as

$Q_{0.1}$, as an initial voltage, to 3.0 V at 0.5 C.

When the positive electrode material meets the above $Q_{0.1}/Q_{0.5}<1.5$, the discharge capacity at the high rate of 0.5 C is closer to the discharge capacity at the low rate of 0.1 C. Therefore, the positive electrode active material has more prominent capacity output stability, and thus when the positive electrode material will not have significant capacity loss when discharged at a high rate. Thus, a more stable output can be achieved by the positive electrode material at a high rate.

Preferably, the positive electrode active material includes a lithium metal oxide as shown in Formula 1.

$$Li_{x-y}Na_yCo_tM1_bM2_aO_2 \qquad \text{Formula 1}$$

In Formula 1, $0.6\leq x\leq 1$, $0<y\leq 0.15$, $0\leq a\leq 0.1$, $0<b\leq 0.1$, $0.98\leq t+b+a\leq 1.02$; M1 is selected from at least one of Te, W, Al, B, P, S, Se, K, Rb and Cs; and M2 is a doping element different from M1.

The lithium metal oxide shown in Formula 1 belongs to a Cmca space group of a cubic crystal system and has a T2 phase stacked structure, and has a 002 peak with a 2θ of 17.8° to 18.1°, a 131 peak with a 2θ of 67.0° to 67.5°, a 111 peak with a 2θ of 37.9° to 38.3°, and a 112 peak with a 2θ of 41.2° to 41.6° in an X-ray diffraction spectrum.

In Formula 1, M2 is a doping element different from M1, for example, M2 is at least one of, for example, Mg, Ti, Mn, Al, Te, W, Ni, Nb, Zr, La, F, Ce, Sr, Y, K, B and P elements.

It should be noted that x in Formula 1 is a parameter related to the molar amount of lithium element in the lithium metal oxide. Specifically, when the above-mentioned positive electrode active material has not undergone any charge and discharge treatment, x meets $0.6\leq x\leq 0.8$; and when the positive electrode active material used in the lithium-ion battery has undergone charge and discharge treatment, x will change under different charge and discharge mechanisms and different charge and discharge stages. Exemplarily, after the positive electrode sheet including the positive electrode active material is assembled with the lithium metal negative electrode sheet to form a battery and the battery is charged and discharged, when the remaining capacity SOC of the battery is 0 (i.e., in a fully discharged state) and the discharge cut-off voltage is 3.0-3.6 V, x value of the lithium metal oxide is within a range of 0.7-1.0. It should be noted that the change in the x value refers to the number of charge and discharge cycle being within 10. The reason is that the lithium metal oxide shown in Formula 1 having the aforementioned crystal structure has some vacancies therein, which can receive lithium atoms from the lithium negative electrode when the lithium metal oxide is subjected to charge and discharge application, thereby increasing the molar amount of lithium ions compared to that before the charge and discharge application. This characteristic helps to further improve the cycling performance and specific capacity of the battery.

The detection method of x is not limited in the present invention. For example, the positive electrode active material can be detected using an inductively coupled plasma (ICP) spectrometer. Alternatively, when detecting the positive electrode active material in the positive electrode sheet, the positive electrode sheet is taken out after disassembling the battery which has been discharged, and the positive electrode sheet is soaked in dimethyl carbonate (DMC) for 1-3 hours or rinsed with DMC, and then naturally dried in a drying room, and then placed in a muffle furnace and calcined at 300-600 °C for 2-5 hours, such that the active layer falls off from the current collector, and the powder to be detected is obtained after sieving with a 200-mesh sieve, and then the metal element in the powder to be detected is detected by ICP to calculate the x value.

Further, when a ratio of peak intensity I1 of the 002 peak to peak intensity I2 of the 131 peak is 6-15; and more further, when a ratio of peak intensity I1 of the 002 peak to peak intensity I3 of the 111 peak is 4-15, and the peak intensity I3 of the 111 peak is larger than peak intensity I4 of the 112 peak, the lithium-ion deintercalation has lower resistance, which is beneficial for improving the cycling performance and rate performance of the lithium-ion battery.

The morphology of the positive electrode active material is not limited in invention, and it may have, for example, a single crystal morphology or a polycrystalline morphology. The specific morphology is related to the selection and proportion of the doping element. Specifically, when the positive electrode active material has a polycrystalline morphology, it is a spherical or spherical-like particle; and when the positive electrode active material has a single crystal morphology, it can be in a whisker, flake, or any other irregular shape.

Further, $3\leq S_{002/111}/Q1_{0.1/0.5}\leq 4.35$, and/or, $3.9\leq S_{002/111}/Q2_{0.1/0.5}\leq 5$, and in this case, since lithium ions are prone to be deintercalated from the positive electrode active material, the lithium-ion battery has better cycling performance and rate performance. Specifically, $S_{002/111}$ is the ratio of the peak intensity I1 of the 002 peak to the peak intensity I3 of the 111 peak; $Q1_{0.1/0.5}$ is a ratio of the intensity of the first discharge peak when the battery formed by the positive electrode sheet including the positive electrode active material and the lithium metal negative electrode is discharged at a rate of 0.1 C to the discharge cut-off voltage of 3.0 V to the intensity of the second discharge peak when the battery is discharged at a rate of 0.5 C to the discharge cut-off voltage of 3.0 V, after the battery is charged to a SOC of 100% at a rate of less than 1 C with the charge cut-off voltage of 4.65 V; and $Q2_{0.1/0.5}$ is a ratio of the intensity of the first discharge peak when the battery formed by the positive electrode sheet including the positive electrode active material and the lithium metal negative electrode is discharged at a rate of 0.1 C to the discharge cut-off voltage of 3.0 V to the intensity of the second discharge peak when the battery is discharged at a rate of 0.5 C to the discharge cut-off voltage of 3.0 V, after the battery is charged to a SOC of 100% at a rate of less than 1 C with the charge cut-off voltage of 4.55 V

The particle diameter of the positive electrode active material is not limited in the present invention. In a specific embodiment, when the positive electrode active material has a Dv50 of 14-17.5 μm, for example, 14 μm, 14.5 μm, 15 μm, 16 μm, 17 μm or 17.5 μm, it is helpful to promote the improvement of the capacity of the lithium-ion battery. It is supposed by the inventor that it may be due to the fact that the positive electrode active material with this particle diameter has excellent performance in particle stacking and is more prone to form a dense stacked state, thereby being able to improve the energy density and cycling performance of the lithium-ion battery through the compaction density of the positive electrode active material. The Dv50 in the present invention is the particle diameter when the cumulative volume reaches 50% of the total volume of all positive electrode active material. Meanwhile, when the positive electrode active material has the above-mentioned Dv50 and the number N of the discharge peaks in the capacity-voltage differential curve of the battery is not less than 4, polarization is significantly suppressed during the charging and discharging process, thereby causing more excellent cycling performance and rate performance of the lithium-ion battery.

Furthermore, when the particle diameter distribution curve of the positive electrode active material of the present invention is a bimodal distribution curve, it is also beneficial to improvement of the capacity and cycling performance of the battery. Specifically, after the positive electrode active material is measured with a laser particle diameter analyzer, its volume particle diameter distribution curve has an obvious double peak, which proves that the positive electrode active material has a strong fluidity and exhibits a high compaction density. Specifically, the positive electrode active material may be present in a positive electrode active layer of the positive electrode sheet or the positive electrode active layer may be disassembled from and taken out of the positive electrode sheet; the positive electrode active layer is soaked in dimethyl carbonate (DMC) for 3 hours, and then naturally dried in a drying room, and then placed in a muffle furnace and calcined at 300 °C for 3 hours, such that the positive electrode powder is separated from the current collector, then the positive electrode powder is sieved with a 200-mesh sieve to obtain a sample powder, then the powder is ultrasonicated for 2 minutes, and then the particle diameter distribution curve is observed by using a laser particle diameter analyzer.

In a specific embodiment, the positive electrode active material includes a first particle and/or a second particle, the first particle has a Dv50 of 4-6 μm, and the second particle has a Dv50 of 17.5-19.5 μm. This composition helps to achieve the above-mentioned bimodal distribution curve and the Dv50 of the positive electrode active material, and more importantly, compared with other compositions, the aforementioned composition of the first and second particles of the present invention has a more significant promoting effect on the optimization of the compaction density of the positive electrode active material. In addition, under premise that the number N of the discharge peaks in the capacity-voltage differential curve of the battery including the positive electrode active material is not less than 4, when the positive electrode active material includes the first particle and the second particle, the positive electrode active material has a more suitable specific surface area, which not only has more lithium-ion deintercalation sites, but also can inhibit the polarization phenomenon during the lithium-ion deintercalation process, thereby leading to a more prominent improvement of the cycling performance of the battery by the positive electrode active material.

Furthermore, when the positive electrode active material includes 0-30% of the first particle and 70-100% of the second particle by mass percentage, it helps to increase the compaction density of the positive electrode active material, thereby having a positive enhancement effect on the energy density of the lithium-ion battery and further improving the cycling performance.

A second aspect of the present invention provides a positive electrode sheet, which includes the positive electrode active material described in the first aspect.

Based on the characteristics of the positive electrode active material in the first aspect, the positive electrode sheet of the present invention helps to improve the rate performance, cycling performance and specific capacity of the lithium-ion battery.

In a specific embodiment, the positive electrode sheet of the present invention includes a positive electrode current collector and a positive electrode active layer disposed on at least one surface of the positive electrode current collector, and the positive electrode active layer includes the above-mentioned positive electrode active material.

It can be understood that the positive electrode active layer includes a conductive agent and a binder in addition to the positive electrode active material. Exemplarily, the positive electrode active layer includes 70-99 wt% of positive electrode active material, 0.5-15 wt% of conductive agent, and 0.5-15 wt% of binder by mass percentage, and further it includes 80-98 wt% of positive electrode active material, 1-10 wt% of conductive agent, and 1-10 wt% of binder.

There is no particular limitation on selection of the conductive agent and the binder, which may be conventionally selected in the art. For example, the conductive agent may be selected from at least one of conductive carbon black, acetylene black, Ketjen black, conductive graphite, conductive carbon fiber, carbon nanotube, single-walled carbon nanotube, and multi-walled carbon nanotube, and the binder may be selected from at least one of polyvinylidene fluoride (PVDF), polytetrafluoroethylene (PTFE), and polyacrylate lithium (PAALi).

Furthermore, in order to improve safety performance, a safety layer may be provided between the positive electrode active layer and the current collector. The material of the safety layer is generally a non-conductive safety material, such as iron-containing compound (such as lithium iron phosphate, iron phosphate, etc.), aluminum-containing compound (such as ceramic alumina), etc. Certainly, the safety layer also includes a binder, and a ratio of the binder to the

safety material can be further determined according to specific needs.

A third aspect of the present invention further provides a lithium-ion battery, which includes the above-mentioned positive electrode sheet and thus has excellent performance in terms of cycling performance and specific capacity.

A specific structure of the lithium-ion battery is not limited in the present invention. For example, the battery can be a square-shell battery, a cylindrical battery, etc.

According to the present invention, the lithium-ion battery further includes a negative electrode sheet, a separator and an electrolyte.

Exemplarily, the electrolyte is a conventional electrolyte including a lithium salt and a solvent. The solvent includes ethylene carbonate (abbreviated as EC), diethyl carbonate (abbreviated as DEC), propylene carbonate (abbreviated as PC), and fluoroethylene carbonate (abbreviated as FEC). Furthermore, the electrolyte further includes an additive shown by Formula T:

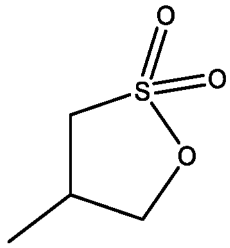

Formula T

In a specific embodiment, when the electrolyte includes 6-9% of additive shown in the above Formula T by mass percentage, in a system including the above-mentioned positive electrode active material, the additive can enable the non-lithium salt component in the electrolyte to preferentially form a SEI film on the negative electrode, and can improve the stability of the SEI film to a certain extent, thereby improving the performance of the lithium-ion battery in terms of cycling performance and rate performance.

Furthermore, the electrolyte includes 5-8% of fluoroethylene carbonate, 10-15% of lithium hexafluorophosphate, and 6-9% of additive by mass percentage. In this case, the lithium-ion battery has more excellent cycling performance and rate performance.

Exemplarily, the negative electrode sheet may be a negative electrode sheet including a lithium-containing layer, for example, a lithium foil or a negative electrode sheet as shown in FIG. 1. Specifically, the negative electrode sheet in FIG. 1 includes a negative electrode current collector 101, a negative electrode active layer 20 and a lithium-containing material layer 30, which are laminated. The negative electrode sheet in FIG. 1 may be that the negative electrode active layer 20 and the lithium-containing material layer 30 are disposed on both sides of the negative electrode current collector, and of course that they may be disposed on only one side of a part of the negative electrode current collector. The lithium-containing material layer may be, for example, lithium foil. Further, the surface density of metallic lithium in the lithium-containing material layer is 0.09 $mg/cm^2$ to 3.5 $mg/cm^2$, and further 0.2 to 2.0 $mg/cm^2$. When such surface density is met, efficient lithium replenishment for the positive electrode active material can be achieved, allowing more lithium ions to be intercalated in the positive electrode active material to achieve a high discharge capacity. Meanwhile, such surface density will not lead to the phenomenon of lithium dendrite precipitation due to excessive lithium ions that cannot be fully intercalated in the negative electrode.

The negative electrode active layer includes a negative electrode active material, a conductive agent and a binder. In a specific embodiment, the negative electrode active layer includes 70-99 wt% of negative electrode active material, 0.5-15 wt% of conductive agent, and 0.5-15 wt% of binder by mass percentage, and further it includes 80-98 wt% of negative electrode active material, 1-10 wt% of conductive agent, and 1-10 wt% of binder. The negative electrode active material is selected from one or more of artificial graphite, natural graphite, hard carbon, mesophase carbon microbead, lithium titanate, silicon carbon and silicon (II) oxide.

Exemplarily, the separator is a polypropylene-based material, or a binder-coated separator formed by coating ceramic on one side or both sides of the polypropylene-based material.

The lithium-ion battery of the present invention is suitable for a high-voltage system. Specifically, in the case where the lithium-ion button battery including the aforementioned positive electrode sheet is at 4.55 V (versus lithium), a gram capacity of positive electrode is ≥220 mAh/g, and the lithium-ion button battery including the aforementioned positive electrode sheet further has excellent cycling performance at ≥4.50 V (versus the aforementioned negative electrode sheet).

Therefore, the lithium-ion battery of the present invention has good rate performance, good cycling stability and high gram capacity at 4.50 V or higher voltage, which can meet the use demand for lightweight and thinning of high-end digital products.

Hereinafter, the positive electrode active material of the present invention will be introduced by specific

examples.

Example 1

The positive electrode active material of this example is prepared according to the following method.

(1) 38.15 g of sodium carbonate powder, 6.889 g of telluric acid powder, and 282.32 g of cobalt nitrate hexahydrate powder were weighted, and put into a high-speed mixing device for mixing by a mixing procedure that is set as follows: mixing at 300 rpm for 3 minutes, mixing at 500 rpm for 5 minutes, and then mixing at 1000 rpm for 10 minutes; then the mixture was taken out, and after it was confirmed that there is no white sodium carbonate spot in the mixture, the mixture was considered uniform.
(2) About 30 g of the mixture was taken, placed into a ceramic crucible, and high-temperature sintered using a well-type muffle furnace with equipment model VBF-1200X, the temperature rise curve during sintering was 5 °C /min, and after the temperature was raised to 750 °C, constant-temperature sintering was carried out for 10 hours, and after sintering, the sample was naturally cooled to atmospheric temperature (15-25 °C) and was taken out, the sample is sodium metal oxide $Na_{0.72}Co_{0.97}Te_{0.03}O_2$ as detected by inductively coupled plasma (ICP) spectrometer, and the particle diameter thereof is 4.83 μm as measured by a laser particle diameter analyzer.
(3) A reaction container was taken, and 10.49 g of lithium hydroxide monohydrate and 17.24 g of lithium nitrate particles were weighed and each added into the reaction container, then 10 g of the $Na_{0.72}Co_{0.97}Te_{0.03}O_2$ synthesized in step (2) was weighed, and put into the reaction container to perform preliminarily mixing and then ion exchange at 280 °C for 0.5 h to obtain a crude product.
(4) The crude product was filtered and washed with deionized water three times and dried at 90 °C for 8 h to obtain sample 1A, and the particle diameter Dv50 thereof is 4.87 μm as measured.
Steps (1) to (4) were then repeated, except that in step (2), about 30 g of the mixture uniformly mixed was taken out, placed into a ceramic crucible, and high-temperature sintered using a well-type muffle furnace with equipment model VBF-1200X, where the temperature rise curve during sintering is 5 °C/min, and after the temperature was raised to 920 °C, constant-temperature sintering was carried out for 10 hours, and after sintering, the sample was naturally cooled to atmospheric temperature and was taken out, the sample is sodium metal oxide $Na_{0.72}Co_{0.97}Te_{0.03}O_2$ as detected by inductively coupled plasma (ICP) spectrometer, and the particle diameter thereof is 18.51 μm as measured by a laser particle diameter analyzer, a sample 1B was obtained after the step (4), which has a particle diameter Dv50 of 18.69 μm.
(5) 2 g of 1A sample and 8 g of 1B sample were weighed and put into a high-speed mixing device for mixing by a mixing procedure that is set as follows: mixing at 300 rpm for 3 minutes, 500 rpm for 5 minutes, and then 1000 rpm for 10 minutes; and then the mixture was taken out to obtain sample 1#, and the particle diameter Dv50 thereof is 16.38 μm as measured.

Examples 2-8

The preparation methods of Examples 2-8 are basically the same as the preparation method of Example 1, except for different metal sources selected in step (1), the mass ratio between the metal sources and the ratio between larger and smaller particles selected. The specific selections are shown in Tables 1 and 2. Finally, samples 2#-8# were obtained, and their detection and analysis results by ICP are shown in Table 1, and the particle diameters Dv50 of the samples are shown in Table 2.

Examples 9-12

The preparation methods and chemical components of Examples 9-12 are exactly the same as those of Example 1, except for the particle diameters of and the ratio between the larger and smaller particles selected in step (1). The specific selections are shown in Table 2. Finally, samples 9#-12# were obtained, and the particle diameters Dv50 of the samples are shown in Table 2.

Comparative Example 1

The positive electrode active material of this comparative example has a chemical composition of $Li_{1.0043}CoO_2$.
The preparation method includes the following steps.

(1) Lithium carbonate and conventional non-doped spherical $Co_3O_4$ particles purchased on the market were weighed at a molar ratio of Li:Co=100.43:100, the two substances were placed in a high-speed mixing device which is the same

stirring device as in the Examples, and were mixed by a mixing procedure that is set as: mixing at 300 rpm for 3 minutes, mixing at 500 rpm for 5 minutes, and mixing at 1000 rpm for 10 minutes; then the mixture was taken out, and after it was confirmed that there is no white lithium carbonate spot in the mixture, the mixture was considered uniform.

(2) About 30 g of the mixture was taken, placed into a ceramic crucible, and high-temperature sintered using a well-type muffle furnace with equipment model VBF-1200X, the temperature rise curve during sintering was 5 °C/min, and after the temperature was raised to 1050 °C, constant-temperature sintering was carried out for 10 hours, and after sintering, the sample was naturally cooled to atmospheric temperature and was taken out to obtain a sintered crude product.

(3) After the crude product was crushed and ground, the obtained powder was placed in a muffle furnace for sintering at 950 °C for 8 hours, and then the sintered product was crushed to obtain $Li_{1.0043}CoO_2$ without any doping and coating, with Dv50 of 16.12 μm.

Comparative Example 2

The positive electrode active material of this comparative example is a conventional high-voltage doped lithium cobaltate positive electrode material, having a chemical composition of $Li_{1.0037}$ $Co_{0.96}Al_{0.04}O_2$.

The preparation method includes the following steps.

(1) Lithium carbonate and conventional Al-doped spherical $Co_3O_4$ particles purchased on the market were weighed at a molar ratio of Li:Co= 100.37: 96, where the $Co_3O_4$ particles have a stoichiometric ratio of Co:Al=96:4; the two substances were placed in a high-speed mixing device which is the same stirring device as in the Examples and were mixed by a mixing procedure that is set as: mixing at 300 rpm for 3 minutes, mixing at 500 rpm for 5 minutes, and mixing at 1000 rpm for 10 minutes; then the mixture was taken out, and after it was confirmed that there is no white lithium carbonate spot in the mixture, the mixture was considered uniform.

(2) About 30 g of the mixture mixed uniformly is taken, placed into a ceramic crucible, and high-temperature sintered using a well-type muffle furnace with equipment model VBF-1200X, the temperature rise curve during sintering was 5 °C/min, and after the temperature was raised to 1030 °C, constant-temperature sintering was carried out for 10 hours, and after sintering, the sample was naturally cooled to atmospheric temperature and was taken out to obtain $Li_{1.0037}$ $C_{0.96}Al_{0.04}O_2$ with a particle diameter of 16.58 μm.

Comparative Example 3

The positive electrode active material of this comparative example is a conventional high-voltage doped lithium cobaltate positive electrode material, having a chemical composition of $Li_{1.0032}Co_{0.948}K_{0.002}Mg_{0.03}Ti_{0.02}O_2$.

The preparation method includes the following steps.

(1) Lithium carbonate and conventional Mg-and-Ti-doped spherical $Co_3O_4$ particles purchased on the market and potassium oxide particles were weighed at a molar ratio of Li:Co:K=100.32: 94.8: 0.2, where the $Co_3O_4$ particles have a stoichiometric ratio of Co: Mg: Ti=94.8: 3.0: 2.0; the three substances were placed in a high-speed mixing device which is the same stirring device as in the Examples, and mixed by a mixing procedure that is set as: mixing at 300 rpm for 3 minutes, mixing at 500 rpm for 5 minutes, and mixing at 1000 rpm for 10 minutes; then the mixture was taken out, and after it was confirmed that there is no white lithium carbonate spot in the mixture, the mixture was considered uniform.

(2) About 30 g of the mixture mixed uniformly was taken, evenly placed into a ceramic crucible, and high-temperature sintered using a well-type muffle furnace with equipment model VBF-1200X, the temperature rise curve during sintering was 5 °C/min, and after the temperature was raised to 1030 °C, constant-temperature sintering was carried out for 10 hours, and after sintering, the sample was naturally cooled to atmospheric temperature and was taken out to obtain a product $Li_{1.0032}Co_{0.948}K_{0.002}Mg_{0.03}Ti_{0.02}O_2$, with a particle diameter of 16.07 μm.

Test Example 1

XRD diffraction was performed on the products of all examples and comparative examples, and the results are shown in Table 3. FIG. 2 is an XRD spectrum of the positive electrode active material of Example 1 of the present invention.

Test Example 2

The products in all examples and comparative examples were magnified at the corresponding ratio of same parameters to obtain kilogram-level powder samples, which were prepared into positive electrode sheets. The positive

electrode sheets were then assembled with negative electrode sheet, electrolyte and separator according to the following method to obtain lithium-ion batteries:

1) The positive electrode active materials in the examples and the comparative examples were mixed with conductive carbon black and PVDF in a weight ratio of 96%:2%:2% and dispersed to obtain positive electrode slurries, and the slurries were coated on aluminum foil current collectors and rolled to prepare positive electrode sheets.
2) Artificial graphite, styrene butadiene rubber (SBR), sodium carboxymethyl cellulose and conductive carbon black were mixed in a weight ratio of 94%:3%:2%:1%, and the mixture was dispersed in water, and mixed by a double planet mixer to obtain a negative electrode slurry, and the slurry was coated on a copper current collector, rolled and dried to obtain a negative electrode active layer;
subsequently, a lithium-containing material layer is superimposed on the surface of the negative electrode active layer by rolling, where the lithium-containing material layer is a lithium foil, with the metallic lithium having a surface density of 1.0 $mg/cm^2$, to finally obtain a negative electrode sheet containing lithium metal.
3) The positive electrode sheet, the negative electrode sheet and a separator are then assembled into a lithium-ion battery, into which a non-aqueous electrolyte is injected.

Where the electrolyte is classified into a first electrolyte and a second electrolyte according to composition difference, where the first electrolyte includes ethylene carbonate (abbreviated as EC), diethyl carbonate (abbreviated as DEC), propylene carbonate (abbreviated as PC), and ethyl methyl carbonate (EMC), which are mixed in a mass ratio of 3:6:2:9, and then into which fluoroethylene carbonate (abbreviated as FEC) accounting for 6% of the total mass of the electrolyte, lithium hexafluorophosphate (abbreviated as $LiPF_6$) accounting for 13% of the total mass of the electrolyte and an additive shown in Formula T and accounting for 2% of the total mass of the electrolyte are added; and
the second electrolyte includes ethylene carbonate (abbreviated as EC), diethyl carbonate (abbreviated as DEC), propylene carbonate (abbreviated as PC), and ethyl methyl carbonate (EMC), which are mixed in a mass ratio of 3:6:2:9, and then into which thenfluoroethylene carbonate (abbreviated as FEC) accounting for 6% of the total mass of the electrolyte, lithium hexafluorophosphate (abbreviated as $LiPF_6$) accounting for 13% of the total mass of the electrolyte and an additive shown in Formula T and accounting for 6.8% of the total mass of the electrolyte are added.
The capacity retention rate of each lithium-ion battery obtained was tested. A specific test method is: battery is charged with a constant current to 4.50 V at a charge rate of 1 C at 25 °C, and then charged with a constant voltage to a rate of 0.05 C, and then discharged to 3.0 V at a discharge rate of 1 C. Such charge and discharge cycle is repeated 500 times, and the discharge capacity at the first cycle and the discharge capacity at the 500th cycle are measured. The capacity retention rate after 500 cycles is calculated according to the following equations. The results are shown in Table 4.

Capacity retention rate Re1 of the lithium-ion battery including the first electrolyte = (discharge capacity at the 500th cycle)/(discharge capacity at the first cycle) * 100%

Capacity retention rate Re2 of the lithium-ion battery including the second electrolyte = (discharge capacity at the 500th cycle)/(discharge capacity at the first cycle) * 100%

Test Example 3

The products in all examples and comparative examples are made into the positive electrode sheets, which are then assembled with a negative electrode sheet, an electrolyte and a separator according to the following method to obtain button batteries:
each of the positive electrode active materials in the examples and the comparative examples, conductive carbon black (SP) and PVDF were mixed at a weight ratio of 80%: 10%: 10% and were dispersed to obtain a positive electrode slurry. The slurry was coated on an aluminum foil current collector, followed by rolled to prepare a positive electrode sheet. The positive electrode sheet was then punched into a small disc with a diameter of 12 mm using a mold, dried and weighed, which is assembled with a 2025 button battery shell, a Li metal disc as negative electrode, and a conventional high-voltage lithium cobaltate electrolyte in a glove box under an Ar protective atmosphere to obtain a button battery.
After each button battery was left to stand for 4 hours under a conventional environment, two groups of initial charge and discharge capacity tests were performed at different charge cut-off voltages according to the following conditions.

1. The battery was charged to 4.55 V at 0.1 C, charged with a constant voltage to 0.025 C, left to stand for 3 minutes, and then discharged to 3.0 V at 0.1 C. Such charging and discharging process was repeated twice. The capacity differential curve at 0.1 C was obtained by performing a capacity differential calculation on the second charge and

discharge curve. The discharge gram capacity C (mAh/g) at 4.55 V/0.1 C was calculate based on an optimal discharge amount in the two discharge processes, as shown in Table 4. The battery was continued to be charged to 4.55 V at 0.5 C, charged with a constant voltage to 0.025 C, left to stand for 3 minutes, and then discharged to 3.0 V at 0.5 C. The capacity differential curve at 0.5 C was obtained by performing capacity differential calculation on the charge and discharge curve at 0.5 C. FIG. 3 is capacity-voltage differential curves of the button battery including the positive electrode active material of Example 1 in the present invention, when charged and discharged at 0.1 C and 0.5 C respectively with the charge cut-off voltage of 4.55 V. FIG. 4 is capacity-voltage differential curve of the button battery including the positive electrode active material of Comparative Example 1 in the present invention when charged and discharged at 0.1 C and 0.5 C respectively with the charge cut-off voltage of 4.55 V. Taking FIG. 3 as an example, the charge voltage differential curve includes a capacity-voltage differential charge curve at upper part and a capacity-voltage differential discharge curve at lower part. The capacity-voltage differential charge curve includes 3 charge peaks (not labeled), and the number of discharge peaks $M_{4.55}$ in the capacity-voltage differential discharge curve is 4 (four discharge peaks D1-D4 in total), where D1 is a discharge peak in the range of 3.5-4.0 V Obviously, the intensity $Q_{0.1}$ of the discharge peak D1 at the rate of 0.1 C is higher than the intensity $Q_{0.5}$ of the discharge peak D1 at the rate of 0.5 C. Relevant data are shown in Table 4.

2. The battery was charged to 4.65 V at 0.1 C, charged with a constant voltage to 0.025 C, left to stand for 3 minutes, and then discharged to 3.0 V at 0.1 C. Such charging and discharging process was repeated twice. The capacity differential curve at 0.1 C was obtained by performing a capacity differential calculation on the second charge and discharge curve. The battery was charged to 4.65 V at 0.5 C, charged with a constant voltage to 0.025 C, left to stand for 3 minutes, and then discharged to 3.0 V at 0.5 C. The capacity differential curve at 0.5 C was obtained by performing capacity differential calculation on the charge and discharge curve at 0.5 C. FIG. 5 is capacity-voltage differential curves of the button battery including the positive electrode active material of Example 1 in the present invention when charged and discharged at 0.1 C and 0.5 C respectively with the charge cut-off voltage of 4.65 V. FIG. 6 is capacity-voltage differential curves of the button battery including the positive electrode active material of Comparative Example 1 in the present invention when charged and discharged at 0.1 C and 0.5 C respectively with the charge cut-off voltage of 4.65 V. Taking FIG. 5 as an example, the charge voltage differential curve includes a capacity-voltage differential charge curve at upper part and a capacity-voltage differential discharge curve at lower part. The capacity-voltage differential charge curve includes 3 charge peaks (not labeled), and the number of discharge peaks $M_{4.65}$ in the capacity-voltage differential discharge curve is 5 (five discharge peaks D1-D5 in total), where D1 is a discharge peak in the range of 3.5-4.0 V Obviously, the intensity of the discharge peak D1 at the rate of 0.1 C is higher than the intensity of the discharge peak D1 at the rate of 0.5 C. Relevant data are shown in Table 4.

In addition to the above method, the capacity differential curve can also be achieved by the electrode sheet of the newly prepared full-battery. After the lithium-ion battery was discharged to 3.0 V at a current of 1/10 of the nominal capacity, the voltage thereof was tested and found to be 3.0-3.6 V. The lithium-ion battery was then disassembled, to take out the positive electrode sheet. The positive electrode sheet was soaked in dimethyl carbonate (DMC) for 3h or rinsed with DMC, and was naturally dried in a drying room, and then the single-side coated positive electrode sheet (if it is not a single-side coated positive electrode sheet, the coating on one side is wiped off with alcohol or acetone) was taken, and then the positive electrode sheet was punched into a small disc with a diameter of 12mm using a mold, dried and weighed, which was assembled with a 2025 button battery shell, a Li metal disc as negative electrode, and a conventional high-voltage lithium cobaltate electrolyte to obtain a button battery in a glove box under an Ar protective atmosphere. The test was performed under the same conditions.

Test Example 4

The lithium-ion battery in Test Example 2 that has not been cycled (after formation) was discharged to 3.0 V at a current of 1/10 of the rated capacity, and then the voltage thereof was tested and found to be 3.0-3.6 V. The lithium-ion battery was then disassembled to take out the positive electrode sheet. The positive electrode sheet was soaked in dimethyl carbonate (DMC) for 3h, naturally dried in a drying room, and then placed in a muffle furnace to be calcined at 300 °C for 3 hours. The sample powder was obtained after sieving using a 200-mesh sieve. Then the particle diameter thereof was measured using a laser particle diameter analyzer, and external sonication was performed before measuring the particle diameter. The results are shown in FIG. 6. FIG. 7 is a particle diameter distribution diagram of the positive electrode active material in Example 1 of the present invention.

Test Example 5

The products in all examples and comparative examples were made into the positive electrode sheets according to the method of Test Example 3, and the positive electrode sheets were then assembled with the negative electrode sheet,

the electrolyte and the separator according to the following method to obtain button batteries.

Each button battery obtained was left to stand for 4 hours under a conventional environment, and then a rate performance test of the battery was performed according to the following steps:

1. the battery was charged to 4.55 V at 0.1 C, charged with a constant voltage to 0.025 C, left to stand for 3 minutes, and then discharged to 3.0 V at 0.1 C; such charging and discharging process was repeated twice, and the discharge gram capacity $C_{0.1}$ under 4.55 V/0.1 C was calculated based on an optimal discharge amount in the two discharging processes;
2. the battery was charged to 4.55 V at 0.2 C, charged with a constant voltage to 0.025 C, left to stand for 3 minutes, and then discharged to 3.0 V at 0.2 C to obtain the discharge gram capacity under 4.55 V/0.2 C; the battery was charged to 4.55 V at 0.2 C, charged with a constant voltage to 0.025 C, left to stand for 3 minutes, and then discharged to 3.0 V at 0.5 C to obtain the discharge gram capacity under 4.55 V/0.5 C; the battery was charged to 4.55 V at 0.2 C, charged with a constant voltage to 0.025 C, left to stand for 3 minutes, and then discharged to 3.0 V at 4.55 V/1.0 C to obtain the discharge gram capacity $C_{1.0}$ at 1.0 C;

the discharge capacity retention rate Q at 1.0 C was obtained by dividing the discharge gram capacity $C_{1.0}$ at 1.0 C by the discharge gram capacity $C_{0.1}$ at 0.1 C, as shown in Table 4 below. FIG. 8 is curves of the capacity retention rates in Example 1 and Comparative Example 1 of the present invention at different rates.

Table 1

| Example | Na-containing metal oxide | Lithium-containing metal oxide | $Na_2CO_3$ | Co $(NO_3)$ 2*6$H_2O$ | $H_6TeO_6$ | $WO_2$ | $Al_2O_3$ | $TiO_2$ | $H_3BO_3$ | $K_2CO_3$ | $H_3PO_4$ | MgO |
|---|---|---|---|---|---|---|---|---|---|---|---|---|
| 1 | $Na_{0.72}Co_{0.97}Te_{0.03}O_2$ | $Li_{0.713}Na_{0.02}Co_{0.97}Te_{0.03}O_2$ | 38.15266 | 282.3185 | 6.8892 | | | | | | | |
| 2 | $Na_{0.72}Co_{0.96}W_{0.02}Te_{0.02}$-$O_3$ | $Li_{0.71}0Na_{0.018}Co_{0.96}W_{0.02}Te_{0.02}$-$O_3$ | 38.15266 | 279.408 | 4.5928 | 4.31678 | | | | | | |
| 3 | $Na_{0.72}Co_{0.97}Al_{0.03}O_2$ | $Li_{0.715}Na_{0.015}Co_{0.97}Al_{0.03}O_2$ | 38.15266 | 282.3185 | | | 1.5294 | | | | | |
| 4 | $Na_{0.72}Co_{0.95}Al_{0.03}Ti_{0.02}O_2$ | $Li_{0.708}Na_{0.013}Co_{0.95}Al_{0.03}Ti_{0.02}$-$O_2$ | 38.15266 | 276.4975 | | | 1.5294 | 1.59734 | | | | |
| 5 | $Na_{0.72}K_{0.02}Co_{0.97}Ti_{0.03}O_2$ | $Li_{0.709}Na_{0.021}K_{0.02}Co_{0.97}Ti_{0.03}O_2$ | 38.15266 | 282.3185 | | | | 2.39601 | | 1.38206 | | |
| 6 | $Na_{0.72}Co_{0.97}B_{0.02}M$-$g_{0.01}O_2$ | $Li_{0.718}Na_{0.012}Co_{0.97}B_{0.02M-}g_{0.01}O_2$ | 38.15266 | 282.3185 | | | | | 1.236 | | | 0.40305 |
| 7 | $Na_{0.72}Co_{0.955}B_{0.03}P_{0.015}$-$O_2$ | $Li_{0.706}Na_{0.016}CO_{0.015}B_{0.03}P_{0.015}$-$O_2$ | 38.15266 | 277.9528 | | | | | 1.854 | | 1.46991 | |
| 8 | $Na_{0.72}CoO_2$ | $Li_{0.721}Na_{0.01}$ $CoO_2$ | 38.15266 | 291.05 | 9 | | | | | | | |

Table 2

| | Dv50 of the first particle | Dv50 of the second particle | Mass ratio of large to small particles | Particle diameter of sample (Dv50) |
|---|---|---|---|---|
| Example 1 | 4.87 | 18.69 | 2: 8 | 16.38 |
| Example 2 | 4.51 | 18.38 | 2: 8 | 15.92 |
| Example 3 | 4.93 | 18.25 | 2: 8 | 15.97 |
| Example 4 | 5.13 | 17.89 | 2: 8 | 16.43 |
| Example 5 | 5.27 | 18.14 | 2: 8 | 16.87 |
| Example 6 | 4.29 | 19.17 | 2: 8 | 17.08 |
| Example 7 | 4.6 | 18.66 | 2: 8 | 16.29 |
| Example 8 | 5.07 | 18.13 | 2: 8 | 16.74 |
| Example 9 | 3.46 | 16.1 | 2: 8 | 13.89 |
| Example 10 | 6.79 | 18.69 | 2: 8 | 18.16 |
| Example 11 | 4.87 | 18.69 | 5: 5 | 12.73 |
| Example 12 | / | 18.69 | 0: 10 | 18.69 |
| Comparative Example 1 | / | 16.12 | 0: 10 | 16.12 |
| Comparative Example 2 | / | 16.58 | 0: 10 | 16.58 |
| Comparative Example 3 | / | 16.07 | 0: 10 | 16.07 |

Table 3

| | 2θ value of 002 peak (°) | 2θ value of 131 peak (°) | 2θ value of 111 peak (°) | 2θ value of 112 peak (°) | Intensity value 13 of 111 peak | Intensity value 14 of 112 peak | 11/12 | 11/13 |
|---|---|---|---|---|---|---|---|---|
| Example 1 | 18.016 | 67.4619 | 38.0631 | 41.4245 | 4730 | 3649 | 10.71 | 5.23 |
| Example 2 | 17.9897 | 67.4488 | 38.0762 | 41.4113 | 4641 | 3700 | 8.92 | 5.15 |
| Example 3 | 17.9897 | 67.4094 | 38.0500 | 41.4376 | 4020 | 3325 | 8.31 | 5.37 |
| Example 4 | 17.9897 | 67.4094 | 38.0894 | 41.4507 | 4041 | 3185 | 8.94 | 5.45 |
| Example 5 | 18.016 | 67.4488 | 38.0659 | 41.4639 | 4318 | 3261 | 8.11 | 5.93 |
| Example 6 | 17.9897 | 67.4488 | 38.0528 | 41.4404 | 3685 | 3312 | 8.05 | 5.98 |
| Example 7 | 17.9897 | 67.4225 | 38.0397 | 41.4535 | 3891 | 3185 | 9.15 | 5.84 |
| Example 8 | 18.016 | 67.4488 | 38.0791 | 41.4667 | 4031 | 3030 | 7.94 | 5.95 |
| Example 9 | 17.9869 | 67.4487 | 38.0922 | 41.4273 | 4122 | 3052 | 8.17 | 6.87 |
| Example 10 | 17.9738 | 67.4355 | 38.1053 | 41.4142 | 3711 | 3050 | 9.73 | 7.60 |
| Example 11 | 18.0000 | 67.4487 | 38.1025 | 41.4376 | 3480 | 3038 | 8.24 | 6.29 |
| Example 12 | 18.016 | 67.4225 | 38.0631 | 41.4535 | 4023 | 2843 | 8.92 | 6.98 |
| Comparative Example 1 | / | / | / | / | / | / | / | / |
| Comparative Example 2 | / | / | / | / | / | / | / | / |
| Comparative Example 3 | / | / | / | / | / | / | / | / |

Table 4

| | C | Q | Re1 | Re2 | Mass | $M_{4.65}$ | Charge cut-off voltage of 4.55 V | | | Charge cut-off voltage of 4.65 V | | |
|---|---|---|---|---|---|---|---|---|---|---|---|---|
| | mAh/g | % | | | Count | | $Q_{0.1}$ | $Q_{0.5}$ | $Q_{0.1}/Q_{0.5}$ | $Q_{0.1}$ | $Q_{0.5}$ | $Q_{0.1}/Q_{0.5}$ |
| Example 1 | 227.3 | 99.52 | 89.92 | 92.16 | 4 | 5 | -26512.1 | -20300.6 | 1.31 | -22010.3 | -16017.3 | 1.37 |
| Example 2 | 227.2 | 99.36 | 89.73 | 92.11 | 4 | 5 | -23023.6 | -21616.2 | 1.07 | -26704.1 | -19220.7 | 1.39 |
| Example 3 | 227.5 | 98.44 | 89.28 | 91.79 | 4 | 5 | -26916.6 | -22261.7 | 1.21 | -24084.8 | -16664.5 | 1.45 |
| Example 4 | 228.1 | 99.64 | 89.17 | 91.88 | 4 | 5 | -27116.70 | -23614.80 | 1.15 | -23375.4 | -15994.9 | 1.46 |
| Example 5 | 227.6 | 99.87 | 89.56 | 92.06 | 4 | 5 | -26287.80 | -21548.70 | 1.22 | -25112.7 | -17054.3 | 1.47 |
| Example 6 | 228.4 | 99.53 | 90.98 | 93.27 | 4 | 5 | -24638.30 | -20145.10 | 1.22 | -24113.6 | -16893.8 | 1.43 |
| Example 7 | 228.1 | 99.10 | 90.06 | 92.94 | 4 | 5 | -25743.10 | -21272.11 | 1.21 | -26254.9 | -18867.5 | 1.39 |
| Example 8 | 225.7 | 99.27 | 85.19 | 88.25 | 4 | 5 | -33830 | -25809.20 | 1.31 | -26413.2 | -18501.7 | 1.43 |
| Example 9 | 228.2 | 99.79 | 85.22 | 87.91 | 4 | 5 | -31719.50 | -24754.10 | 1.28 | -25317.9 | -17984.3 | 1.41 |
| Example 10 | 226.73 | 99.34 | 86.31 | 88.14 | 4 | 5 | -29875.30 | -23762.90 | 1.26 | -26182.7 | -18293.2 | 1.43 |
| Example 11 | 228.36 | 99.98 | 84.15 | 86.28 | 4 | 5 | -28937.60 | -23184.41 | 1.25 | -25917.5 | -18091.8 | 1.43 |
| Example 12 | 225.3 | 99.14 | 86.74 | 88.31 | 4 | 5 | -31072 | -25819.00 | 1.20 | -27117.3 | -19051.6 | 1.42 |
| Comparative Example 1 | 198.9 | 92.97 | 43.16 | | 2 | 3 | -13528.70 | -7332.40 | 1.85 | -13430.70 | -6317.86 | 2.13 |
| Comparative Example 2 | 193.8 | 90.12 | 76.15 | | 2 | 3 | -13703.50 | -7608.81 | 1.80 | -13709.9 | -6643.26 | 2.06 |
| Comparative Example 3 | 194.1 | 89.34 | 80.34 | | 2 | 3 | -13756.63 | -7057.22 | 1.95 | -10771.87 | -6297.76 | 1.71 |

It can be seen from Table 4 that the positive electrode active material of the present invention is beneficial to improving the stability of the battery under high voltage, thereby enabling the battery to have excellent cycling performance, rate performance and specific capacity.

Finally, it should be noted that the above examples are only used to illustrate, rather than to limit the technical solutions of the present invention. Although the present invention has been described in detail with reference to the aforementioned examples, those skilled in the art should understand that they can still amend the technical solutions described in the aforementioned examples, or equivalently replace some or all of the technical features therein. While these amendments or replacements will not make the essence of the corresponding technical solutions deviate from the scope of the technical solutions of the examples in the present invention.

## Claims

1. A positive electrode active material, wherein a positive electrode sheet comprising the positive electrode active material and a lithium metal negative electrode form a half-battery, and when the half-battery is discharged to a discharge cut-off voltage of 3.0 V at a rate of less than 1 C after being charged to a state of charge, SOC, of 100% at a rate of less than 1 C with a charge cut-off voltage of 4.55 V-4.65 V, number N of discharge peaks in a capacity-voltage differential curve of the battery is not less than 4.

2. A positive electrode active material, wherein a positive electrode sheet including the positive electrode active material and a lithium metal negative electrode form a full-battery, and when the full-battery is discharged to a discharge cut-off voltage of 3.0 V at a rate of less than 1 C after being charged to a state of charge, SOC, of 100% at a rate of less than 1 C with a charge cut-off voltage of 4.55 V-4.65 V, number N of discharge peaks in a capacity-voltage differential curve of the battery is not less than 4.

3. The positive electrode active material according to claim 1 or 2, wherein N=4 when the charge cut-off voltage is 4.55 V and the discharge cut-off voltage is 3.0;
and/or, N=5 when the charge cut-off voltage is 4.65 V and the discharge cut-off voltage is 3.0 V.

4. The positive electrode active material according to any one of claims 1 to 3, wherein after the battery formed by the positive electrode sheet comprising the positive electrode active material and the lithium metal negative electrode to form a battery is charged to the SOC of 100% at the rate of less than 1 C with the charge cut-off voltage of 4.55 V to 4.65 V,

    when discharging at a first rate under the charge cut-off voltage $V_c$ of 4.55 V to 4.65 V, a first discharge peak with a discharge intensity of Q1 appears in a voltage range of 3.5 to 4.0 V; and
    when discharging at a second rate under the charge cut-off voltage $V_c$ of 4.55 V to 4.65 V, a second discharge peak with a discharge intensity of $Q_2$ appears in a voltage range of 3.5 to 4.0 V, and the second rate is greater than the first rate;
    wherein, $Q_1>Q_2$.

5. The positive electrode active material according to claim 4, wherein intensity of the first discharge peak when the battery is discharged at a rate of 0.1 C to the discharge cut-off voltage is $Q_{0.1}$, and intensity of the second discharge peak when the battery is discharged at a rate of 0.5 C to the discharge cut-off voltage is $Q_{0.5}$, wherein $Q_{0.1}/Q_{0.5}<1.5$.

6. The positive electrode active material according to any one of claims 1 to 5, wherein the positive electrode active material comprises a lithium metal oxide shown by Formula 1;

    the lithium metal oxide belongs to a Cmca space group of a cubic crystal system and has a T2 phase stacked structure, and has a 002 peak with a 2θ of 17.8° to 18.1°, a 131 peak with a 2θ of 67.0° to 67.5°, a 111 peak with a 2θ of 37.9° to 38.3°, and a 112 peak with a 2θ of 41.2° to 41.6° in an X-ray diffraction spectrum;

    $$Li_{x-y}Na_yCo_tM1_bM2_aO_2 \quad \text{Formula 1}$$

    in Formula 1, $0.6\leq x\leq 1$, $0<y\leq 0.15$, $0\leq a\leq 0.1$, $0<b\leq 0.1$, $0.98\leq t+b+a\leq 1.02$; M1 is selected from at least one of Te, W, Al, B, P, S, Se, K, Rb and Cs; and M2 is a doping element different from M1;
    preferably, a ratio of peak intensity I1 of the 002 peak to peak intensity I2 of the 131 peak is 6-15;
    preferably, a ratio of peak intensity I1 of the 002 peak to peak intensity I3 of the 111 peak is 4-15, and the peak

intensity I3 of the 111 peak is greater than peak intensity I4 of the 112 peak.

7. The positive electrode active material according to claim 6, wherein:

$$3 \leqslant S_{002/111}/Q1_{0.1/0.5} \leqslant 4.35, \text{ and/or, } 3.9 \leqslant S_{002/111}/Q2_{0.1/0.5} \leqslant 5$$

wherein, $S_{002/111}$ is the ratio of the peak intensity I1 of the 002 peak to the peak intensity I3 of the 111 peak;
$Q1_{0.1/0.5}$ is a ratio of the intensity of the first discharge peak when the battery formed by the positive electrode sheet comprising the positive electrode active material and the lithium metal negative electrode is discharged at a rate of 0.1 C to the discharge cut-off voltage to the intensity of the second discharge peak when the battery is discharged at a rate of 0.5 C to the discharge cut-off voltage, after the battery is charged to the SOC of 100% at a rate of less than 1 C with a charge cut-off voltage of 4.65 V; and
$Q2_{0.1/0.5}$ is a ratio of the intensity of the first discharge peak when the battery the positive electrode sheet comprising the positive electrode active material and the lithium metal negative electrode is discharged at a rate of 0.1 C to the discharge cut-off voltage to the intensity of the second discharge peak when the battery is discharged at a rate of 0.5 C to the discharge cut-off voltage, after the battery is charged to the SOC of 100% at a rate of less than 1 C with a charge cut-off voltage of 4.55 V.

8. The positive electrode active material according to any one of claims 1 to 7, wherein the positive electrode active material has a Dv50 of 14-17.5 μm;
and/or, a particle diameter distribution curve of the positive electrode active material is a bimodal distribution curve.

9. The positive electrode active material according to claim 6 or 7, wherein the positive electrode active material comprises a first particle and/or a second particle, the first particle has a Dv50 of 4-6 μm, and the second particle has a Dv50 of 17.5-19.5 μm; and
preferably, the positive electrode active material comprises 0-30% of the first particle and 70-100% of the second particle by mass percentage.

10. A positive electrode sheet, comprising the positive electrode active material according to any one of claims 1 to 9.

11. A lithium-ion battery, comprising the positive electrode active material according to any one of claims 1 to 9 or the positive electrode sheet according to claim 10;
preferably, the lithium-ion battery has a working voltage of greater than or equal to 4.5V.

12. The lithium-ion battery according to claim 11, wherein the lithium-ion battery further comprises a negative electrode sheet, and the negative electrode sheet comprises a lithium-containing material layer (30).

13. The lithium-ion battery according to claim 12, wherein metallic lithium in the lithium-containing material layer (30) has a surface density of 0.09 mg/cm$^2$ to 3.5 mg/cm$^2$, preferably 0.2 to 2.0 mg/cm$^2$.

14. The lithium-ion battery according to any one of claims 11 to 13, wherein the lithium-ion battery further comprises an electrolyte; the electrolyte comprises an additive shown in Formula T by mass percentage, and a mass percentage of the additive in the electrolyte is 6-9%;

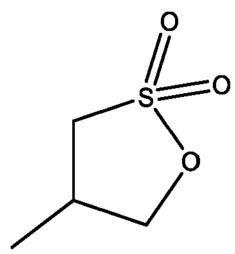

Formula T.

15. The lithium-ion battery according to claim 14, wherein the electrolyte further comprises: 5-8% of fluoroethylene carbonate and 10-15% of lithium hexafluorophosphate.

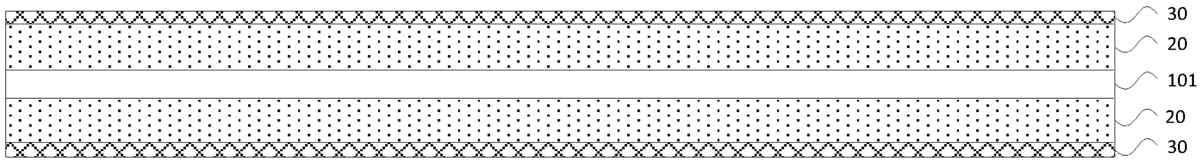


FIG. 1

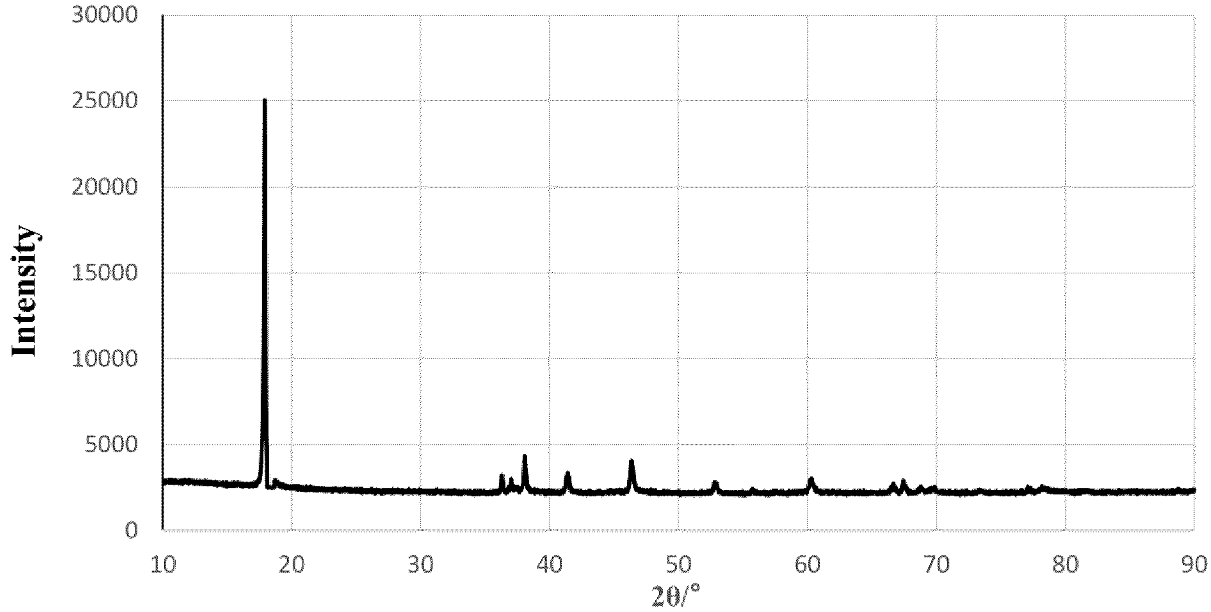


FIG. 2

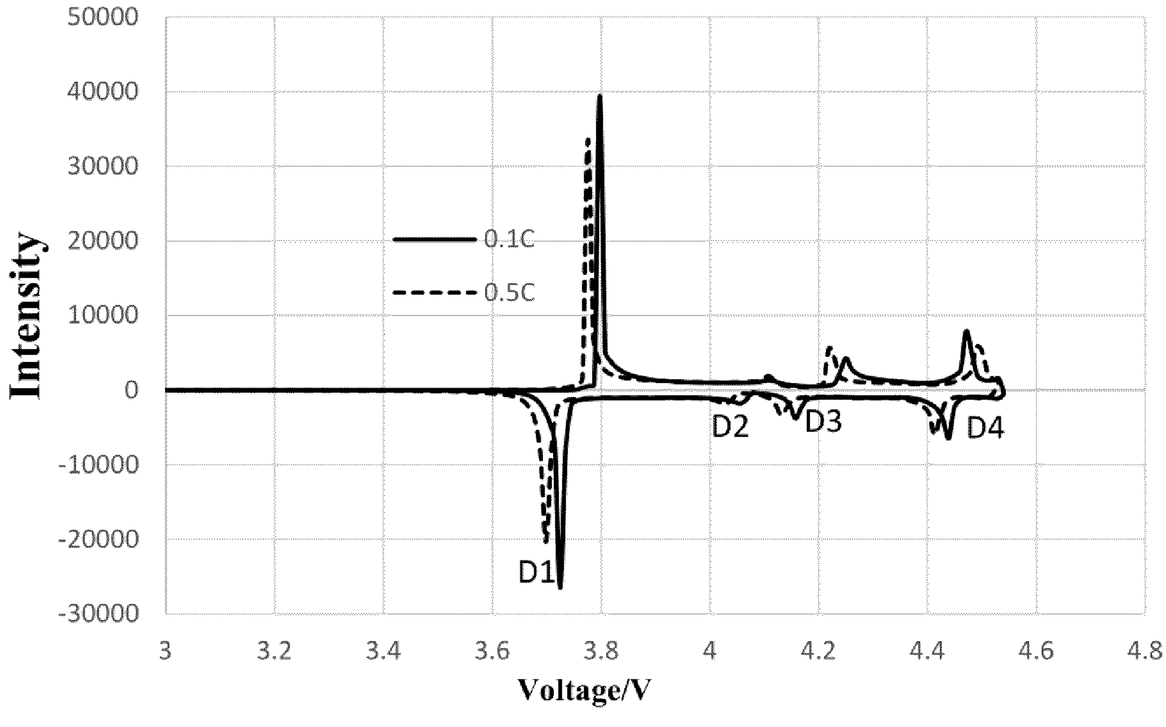


FIG. 3

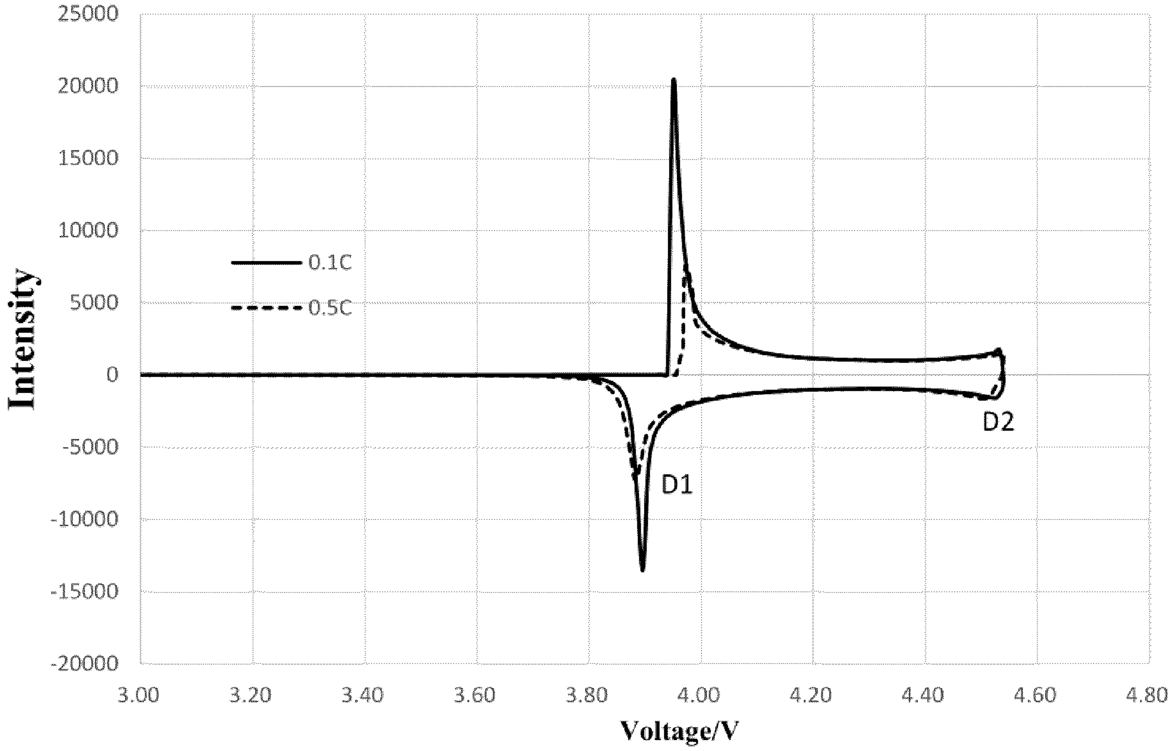
25000
20000
15000
10000
5000
0
-5000
-10000
-15000
-20000
Intensity
0.1C
0.5C
D1
D2
3.00
3.20
3.40
3.60
3.80
4.00
4.20
4.40
4.60
4.80
Voltage/V

FIG. 4

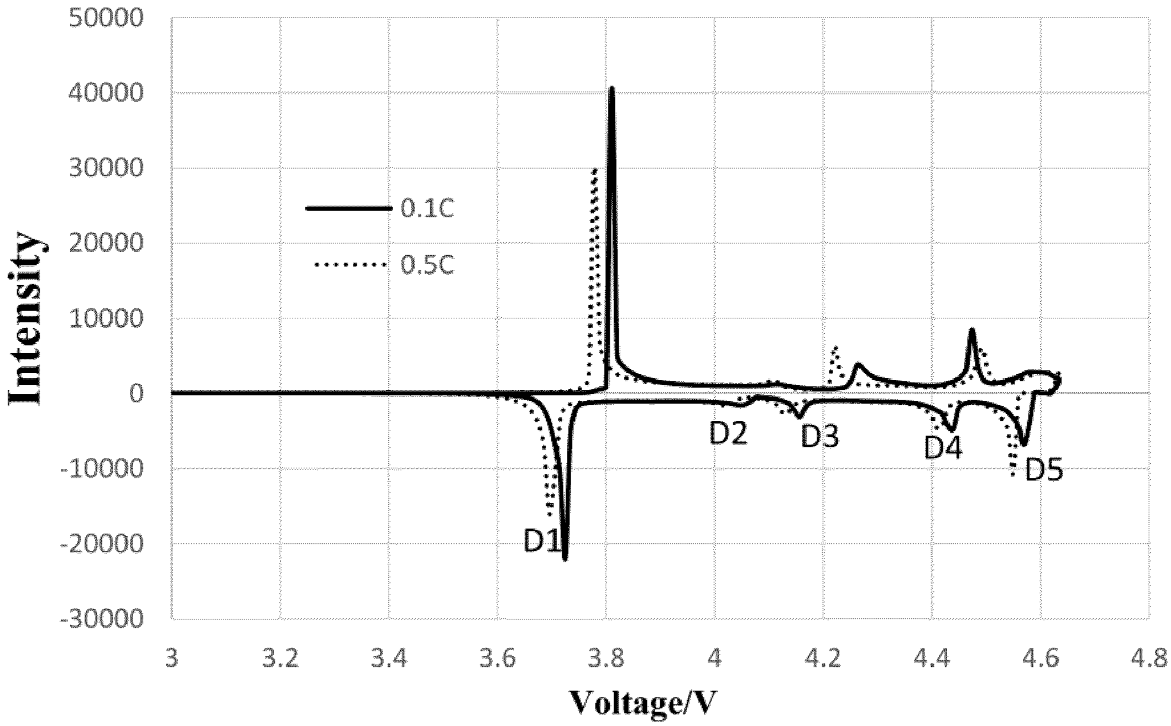
50000
40000
30000
20000
10000
0
-10000
-20000
-30000
Intensity
0.1C
0.5C
D1
D2
D3
D4
D5
3
3.2
3.4
3.6
3.8
4
4.2
4.4
4.6
4.8
Voltage/V

FIG. 5

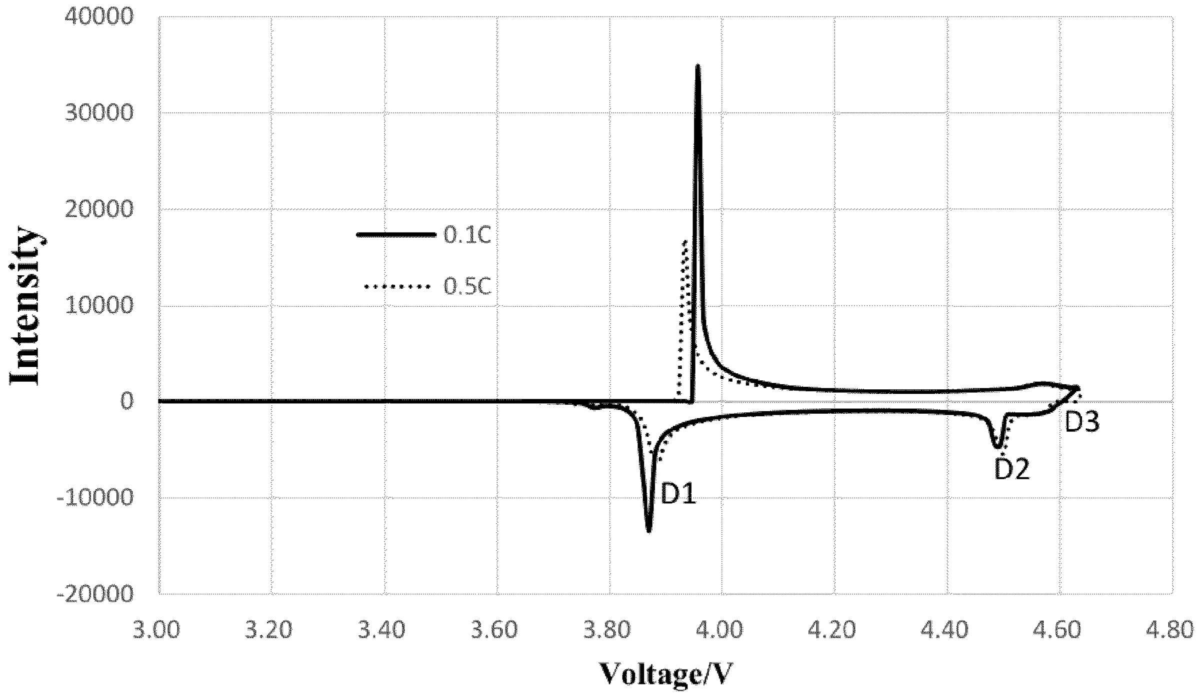
40000
30000
20000
10000
0
-10000
-20000
Intensity
0.1C
0.5C
D1
D2
D3
3.00
3.20
3.40
3.60
3.80
4.00
4.20
4.40
4.60
4.80
Voltage/V

FIG. 6

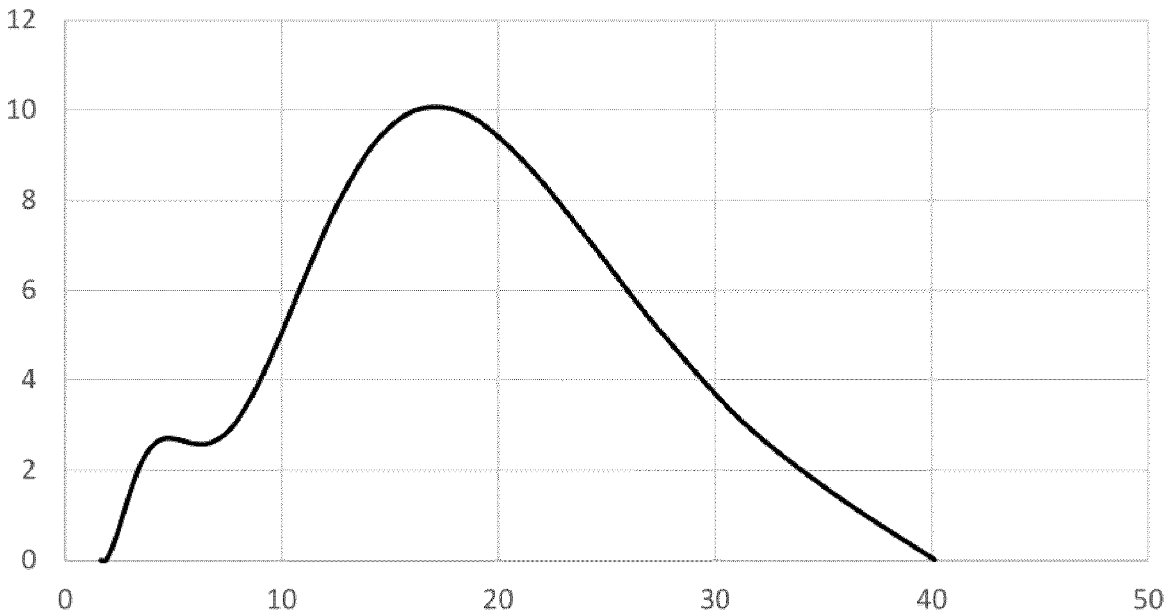
12
10
8
6
4
2
0
0
10
20
30
40
50

FIG. 7

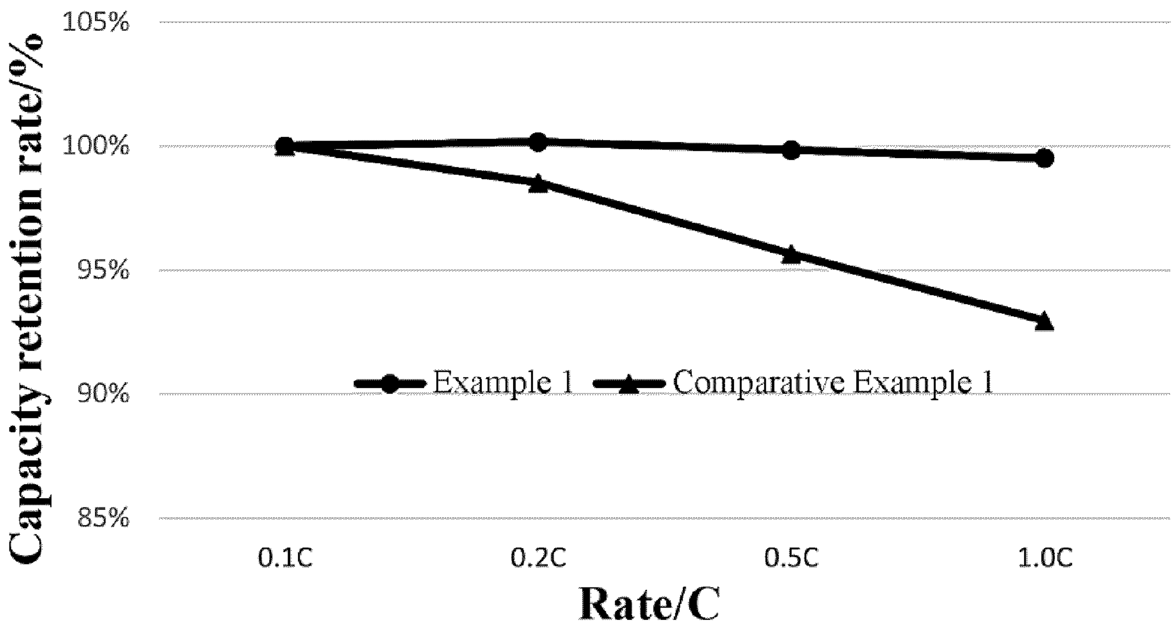
Capacity retention rate/%
105%
100%
95%
90%
85%
Example 1
Comparative Example 1
0.1C
0.2C
0.5C
1.0C
Rate/C

FIG. 8